(19) Europäisches Patentamt / European Patent Office / Office européen des brevets

(11) **EP 2 813 594 B1**

(12) **EUROPEAN PATENT SPECIFICATION**

(45) Date of publication and mention
of the grant of the patent:
**12.12.2018 Bulletin 2018/50**

(21) Application number: **13746313.9**

(22) Date of filing: **24.01.2013**

(51) Int Cl.:
*C22C 38/00* (2006.01)     *B23K 9/025* (2006.01)
*B23K 9/18* (2006.01)     *C22C 38/06* (2006.01)
*B32B 15/01* (2006.01)     *F22B 37/12* (2006.01)
*C22C 38/02* (2006.01)     *C22C 38/04* (2006.01)
*C22C 38/40* (2006.01)     *C22C 38/42* (2006.01)
*C22C 38/44* (2006.01)     *C22C 38/46* (2006.01)
*C22C 38/48* (2006.01)     *C22C 38/50* (2006.01)
*C22C 38/52* (2006.01)     *C22C 38/54* (2006.01)
*B23K 103/04* (2006.01)     *B23K 101/08* (2006.01)

(86) International application number:
**PCT/JP2013/051413**

(87) International publication number:
**WO 2013/118585 (15.08.2013 Gazette 2013/33)**

(54) **DOUBLE PIPE AND WELDED STRUCTURE UTILIZING SAME**

DOPPELROHR UND GESCHWEISSTE STRUKTUR DAMIT

TUYAU À DOUBLE ENVELOPPE ET STRUCTURE SOUDÉE L'UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.02.2012 JP 2012024687**

(43) Date of publication of application:
**17.12.2014 Bulletin 2014/51**

(73) Proprietor: **Nippon Steel & Sumitomo Metal
Corporation
Tokyo 100-8071 (JP)**

(72) Inventors:
• **HIRATA, Hiroyuki**
**Tokyo 100-8071 (JP)**
• **YOSHIZAWA, Mitsuru**
**Tokyo 100-8071 (JP)**
• **OGAWA, Hidenori**
**Tokyo 100-8071 (JP)**

(74) Representative: **Zimmermann & Partner
Patentanwälte mbB
Postfach 330 920
80069 München (DE)**

(56) References cited:
**EP-A2- 0 120 704     CN-A- 101 530 907
JP-A- S61 562     JP-A- H06 322 488
JP-A- H09 217 146     JP-A- S57 120 002
JP-A- S59 176 501     JP-A- 2004 003 000
JP-A- 2004 003 000     JP-A- 2007 217 783
JP-B2- 4 739 978**

**Description**

TECHNICAL FIELD

The present invention relates to a double tube and a welded structure using the double tube. More particularly, the invention relates to a double tube excellent in weld crack resistance, which can be used as a material for high-temperature equipment with plates, metal fittings, and the like fillet-welded to the outside surface of the tube, and to a welded structure forming the high-temperature equipment manufactured by using the double tube. As one specific example of the "welded structure", there can be cited a panel (hereinafter, referred to as a "furnace wall") forming the combustion part of a power generating boiler, on which plates called fins are fillet-welded in the longitudinal direction to the outside surface of the tube.

BACKGROUND ART

In recent years, for the power generating boiler, the new installation of "ultra super critical pressure boilers", in which the temperature and pressure of steam are raised to achieve high efficiency, has been advanced in the world. Further, the practical use of "next-generation ultra super critical pressure boilers", in which the steam temperature, being about 600°C so far, is raised to 650°C or higher, has been planned. The reason for such a trend is that energy saving, effective use of resources, and reduction in $CO_2$ gas emission for environmental preservation have been challenges to energy problem, and have become important industrial policies. Also, in the power generating boiler in which a fossil fuel is burnt, the reason for such a trend is that high temperature and pressure is advantageous in achieving high efficiency.
The high temperature and pressure of steam raises the temperature of tubes and pipes for transmitting steam, for example, heat-transfer tubes such as a superheater tube and a resuperheater tube, and main steam pipes during operation of such tubes and pipes. Therefore, the material used in such a harsh environment for long period of time is required to have not only high-temperature strength and high-temperature corrosion resistance but also long-term stability of metal micro-structure and excellent creep characteristics.
Accordingly, as materials for these tubes and pipes, Patent Documents 1 to 3 disclose heat resistant alloys in which the contents of Cr and Ni are increased, and moreover one kind or more of Mo and W are contained, whereby it is attempted to improve the creep rupture strength, which is a high-temperature strength.
Furthermore, to meet the exacting requirement for high-temperature strength characteristics, especially the requirement for creep rupture strength, Patent Documents 4 to 7 disclose heat resistant austenitic alloys in which, by mass percent, 28 to 38% of Cr and 35 to 60% of Ni are contained, and the precipitation of α-Cr phase in body-centered cubic structure consisting mainly of Cr is utilized, whereby it is attempted to further improve the creep rupture strength.
Patent Document 12 is directed to a tube blank of a dual metal seamless steel tube used for a boiler. The tube comprises an inner layer and an outer layer and a transition layer which is arranged between the inner layer and the outer layer and is respectively bonded with the inner layer and the outer layer completely and metallurgically. Patent Document 13 discloses a high-strength low-alloy steel boiler tube comprising, by mass, 0.03-0.15% C, 0.10-0.80% Si, 0.10-1.50% Mn, ≤0.030% P, ≤0.010% S, ≤0.020% O, 0.001-0.01% N, ≤0.01% Al, 0.30-0.80% Cr, 0.01% but <0.50% Mo as basic components and the balance being Fe and unavoidable impurities, preferably has a metal structure with a ferrite fraction of 10-90% and is used without any further treatment after normalizing.

LIST OF PRIOR ART DOCUMENTS

PATENT DOCUMENTS

[Patent Document 1] JP60-100640A
[Patent Document 2] JP64-55352A
[Patent Document 3] JP2-200756A
[Patent Document 4] JP7-216511A
[Patent Document 5] JP7-331390A
[Patent Document 6] JP8-127848A
[Patent Document 7] JP8-218140A
[Patent Document 8] JP6-106237A
[Patent Document 9] JP57-120002A
[Patent Document 10] JP64-17806A
[Patent Document 11] JP5-279801A

[Patent Document 12] CN 101530907A
[Patent Document 13] JP4-739978 B

## SUMMARY OF THE INVENTION

## PROBLEMES TO BE SOLVED BY THE INVENTION

As a material for furnace wall tube, conventionally, carbon steel or 1.25%Cr-0.5%Mo steel has been used widely.

However, due to the high temperature and pressure of steam, a furnace wall tube has also been required to have higher high-temperature strength and high-temperature corrosion resistance.

Therefore, there is a trend such that it is attempted to use 2.25 to 9%Cr heat resistant ferritic steel, in which the strength is enhanced by containing V and Nb, represented by ASME A213 Grade T91 and Grade T23, and further to use heat resistant austenitic alloys disclosed in Patent Documents 1 to 7.

As described above, the furnace wall is caused to consist of a panel by fillet-welding fins in the longitudinal direction to the outside surface of furnace wall tube.

When fillet welding is performed, for 9%Cr heat resistant ferritic steel, preheating and/or postheating are essential from the viewpoint of preventing low-temperature weld cracks. However, preheating of the whole of long furnace wall tube or a zone to be welded in the longitudinal direction decreases the production efficiency, and leads to an increase in cost. Further, postheating of a large-size panel that is fillet-welded also is not realistic on an industry basis from the viewpoint of cost.

For 2.25%Cr heat resistant ferritic steel, although it is said that preheating and/or postheating can be omitted, in submerged arc welding and metal active gas welding used frequently for fillet welding of furnace wall tube, low-temperature weld cracks occur in some cases. Therefore, also for the 2.25%Cr heat resistant ferritic steel, to steadily avoid the occurrence of low-temperature weld cracks, preheating and/or postheating must be performed as in the case of 9%Cr heat resistant ferritic steel, so that 2.25%Cr heat resistant ferritic steel is not realistic on an industry basis.

On the other hand, for heat resistant austenitic steel (heat resistant alloy), although excellent low-temperature weld crack resistance is provided, the thermal expansion coefficient is higher than that of heat resistant ferritic steel, so that the deformation is large. Therefore, in the case where fillet welding is performed under high restraint conditions to manufacture the panel with great dimensional accuracy, there arises a problem that hot cracking is liable to occur in a weld heat affected zone (hereinafter, referred to as a "HAZ"). Therefore, also for the heat resistant austenitic steel (heat resistant alloy), it is difficult to achieve excellent weld crack resistance during fillet welding without performing preheating or postheating.

The present invention has been made in view of the above-described situation, and accordingly an objective thereof is to provide a double tube excellent in weld crack resistance, which can be used as a material for various types of high-temperature equipment by fillet-welding plates, metal fittings, and the like (hereinafter, referred simply to as "plates" in some cases) to the outside surface of tube, and a welded structure forming the high-temperature equipment, which is manufactured by using the double tube.

## MEANS FOR SOLVING THE PROBLEMS

To solve the above-described problems, the present inventors evaluated the fillet weldability between heat resistant ferritic steel tube and plates, and the fillet weldability between heat resistant austenitic steel (heat resistant alloy) tube and plates, and conducted close examination of the occurrence behavior of weld cracks. As the result, the facts of the following items (a) and (b) were clarified. In the explanation below, for simplicity, heat resistant austenitic steel and heat resistant austenitic alloy are collectively referred simply to as "heat resistant austenitic steel" in some cases.

(a) The weld cracks during the time when a heat resistant ferritic steel tube and plates are fillet-welded to each other occur in a coarsened and hardened zone close to the fusion boundary of HAZ. Further, the occurrence of the weld cracks is remarkable in the case where fillet welding is performed by submerged arc welding, and the fracture surface shows a quasi-cleavage fracture surface. From such a characteristic phenomenon, it is judged that the weld cracks are "low-temperature cracks" attributable to diffusible hydrogen. The reason why the occurrence of cracks is remarkable during the time when fillet welding is performed by applying submerged arc welding is presumed to be the increase in the amount of so-called "diffusible hydrogen" that is mixed in the weld metal and is diffused into the HAZ during welding.

(b) The weld cracks during the time when a heat resistant austenitic steel tube and plates are fillet-welded to each other occur in a coarsened crystal grain boundary close to the fusion boundary of HAZ. On the crack fracture surface, fusion traces are recognized; on the fracture surface, the concentration of P and S is recognized; and in the case where the steel contains B, the concentration of B is also recognized in addition to that of P and S. Moreover, as the wall thickness of tube is increased, the occurrence of cracks is more remarkable. From such a characteristic phenomenon, it is judged that the weld cracks are "liquation cracks" attributable to the decrease in fusing point of grain boundary caused by the grain boundary segregation of P, S and B. Further, the reason why the occurrence of cracks is more remarkable with the increase in the wall thickness of tube is presumed to be that the deformation occurring during welding becomes large, and resultantly the "restraint stress" caused by circumferential restraint increases.

From the item (a), it can be seen that, in order to suppress the low-temperature cracks occurring in the heat resistant ferritic steel tube during the time when the heat resistant ferritic steel tube and the plates are fillet-welded to each other, the measures of the following items (a-1) and (a-2) have only to be taken.
(a-1) To suppress the coarsening and hardening of HAZ.
(a-2) To apply a welding method in which the amount of hydrogen mixed in during welding can be decreased as much as possible, or to promote the discharge of hydrogen by means of preheating and/or postheating.

However, concerning the measures of item (a-1), if the heat resistant ferritic steel tube is used as a single tube when the plates are fillet-welded to the steel tube, and welding heat input is decreased to suppress the coarsening of HAZ, the cooling rate increases and inversely the hardening is promoted. Therefore, in the case where the heat resistant ferritic steel tube is used as a single tube, it is difficult to apply the method of decreasing welding heat input to suppress the coarsening of HAZ from a practical viewpoint.
Concerning the measures of item (a-2), by the use of TIG welding, the amount of diffusible hydrogen that is mixed in the weld metal during welding can be decreased. However, for example, in the case of submerged arc welding that is used frequently for fillet welding between the furnace wall tube and the plates, it is difficult to reduce the amount of diffusible hydrogen. Also, although the hydrogen discharging effect of preheating and/or postheating is remarkable, as described before, the preheating and/or postheating are not realistic on an industry basis.
On the other hand, from the item (b), it can be seen that, in order to suppress the liquation cracks occurring in the heat resistant austenitic steel tube in the case where the heat resistant austenitic steel tube and the plates are fillet-welded to each other, the measures of the following items (b-1) and (b-2) have only to be taken.
(b-1) To decrease the contents of P, S and B in steel as much as possible.
(b-2) To reduce the restraint stress by means of the decrease in the wall thickness of tube.

However, concerning the measures of item (b-1), since the treatment leads to an increase in steel production cost, more inexpensive method is desired on an industry basis.
Concerning the measures of item (b-2), from the viewpoint of assuring the strength of structure, there is a limitation on the decrease in the wall thickness of tube.
Accordingly, to solve the above-described various problems contrary to each other, the present inventors conducted further studies.
As the result, it was clarified that the tube used for fillet welding of the plates is made of a double tube in which the inside tube is a heat resistant ferritic steel tube and the outside tube is a heat resistant austenitic steel tube, and the fusion depth of fillet weld zone is made proper, whereby the weld cracks can be prevented.
The following items (c) to (e) are new findings obtained by the present inventors.

(c) If the wall thickness of outside tube satisfies a specific condition, specifically satisfies Formula of
wall thickness (mm) of outside tube $\geq$ fusion depth (mm) in fillet weld + 0.3 mm,
the weld penetration during welding can be stopped on the outside tube side. In this case, the heat resistant ferritic steel forming the inside tube is not exposed to high temperatures, so that the coarsening of HAZ of the inside tube can be suppressed.
(d) By using a heat resistant austenitic steel having a high solubility of hydrogen for the outside tube, the diffusion of hydrogen mixed in during welding to the heat resistant ferritic steel side can be suppressed.
(e) If the wall thickness of outside tube and "the wall thickness of outside tube + the wall thickness of inside tube", that is, the total wall thickness of the double tube satisfy a specific condition, specifically satisfy Formula of
wall thickness of outside tube / (wall thickness of outside tube + wall thickness of inside tube) $\leq$ 0.4,
the thermal deformation of the whole of double tube decreases, so that the restraint stress applied to the heat resistant austenitic steel forming the outside tube can be reduced.

So far, some double tubes assumed to be used in boiler applications such as a furnace wall have been proposed.

For example, Patent Document 8 discloses a double tube in which it is attempted to improve the corrosion resistance and wear resistance by means of the increase in the thickness of outside tube on the inside of furnace.

Also, Patent Documents 9 and 10 disclose double tubes in which an austenitic material is used for both of the outside tube and the inside tube, whereby it is attempted to improve both of the corrosion resistance and the high-temperature strength.

Further, Patent Document 11 discloses a double tube in which a carbon steel is used for the inside tube and an austenitic Cr-Ni-Mo-Fe based alloy is used for the outside tube, whereby it is attempted to improve both of the thermal fatigue resistance and the corrosion resistance.

However, all of Patent Documents 8 to 11 do not at all describe the problems to be solved by the present invention, and as a matter of course, do not describe the measures against these problems. Therefore, even if fillet welding is performed between the double tubes disclosed in Patent Documents 8 to 11 and the plates, weld cracks cannot by any possibility be prevented.

The present invention was accomplished on the basis of the above-described findings, and the gists thereof are a double tube for welded structure and a welded structure as defined in the appended claims.

ADVANTAGEOUS EFFECTS OF THE INVENTION

The double tube for welded structure of the present invention is excellent in weld crack resistance. Therefore, if the double tube of the present invention is used, a welded structure forming various types of high-temperature equipment can be manufactured by fillet-welding plates, metal fittings, and the like to the outside surface of the tube by means of ordinary submerged arc welding without performing treatment such as preheating, postheating, and cleaning of steel.

BRIEF DESCRIPTION OF THE DRAWINGS

[Figure 1] Figure 1 is a schematic view for explaining a restraint welded test body simulating the fillet weld of furnace wall tube, which is produced in Examples.

[Figure 2] Figure 2 is a schematic view for explaining a method for measuring a fusion depth in fillet weld.

MODE FOR CARRYING OUT THE INVENTION

The requisites for the present invention will now be described in detail. In the following description, the symbol "%" for the content of each element means "% by mass".

(A) Chemical composition 1 (chemical composition of inside tube (heat resistant ferritic steel)):

C: 0.01 to 0.1%

C (carbon) is an element effective in enhancing the hardenability and steadily obtaining martensitic and/or bainitic structures. Further, C forms carbides, and contributes to the assurance of creep strength at high temperatures. In order to achieve the above-described effects, 0.01% or more of C must be contained. However, if C is contained in large amounts, the HAZ is hardened remarkably, and the low-temperature crack susceptibility is enhanced extremely. Therefore, an upper limit is placed, and the content of C is set to 0.01 to 0.1%. The lower limit of the C content is preferably 0.015%, further preferably 0.02%. Also, the upper limit of the C content is preferably 0.09%, further preferably 0.08%.

Si: 0.01 to 0.5%

Si (silicon) has a deoxidizing function, and also is an element effective in improving the corrosion resistance and oxidation resistance at high temperatures. In order to achieve these effects, 0.01% or more of Si must be contained. However, an excessive content of Si leads to a decrease in creep ductility and toughness. Therefore, an upper limit is placed, and the content of Si is set to 0.01 to 0.5%. The lower limit of the Si content is preferably 0.05%, further preferably 0.1%. Also, the upper limit of the Si content is preferably 0.45%, further preferably 0.4%.

Mn: 0.01 to 1%

Mn (manganese) has a deoxidizing function like Si. Manganese is an element effective in enhancing the hardenability, and in steadily obtaining martensitic and/or bainitic structures. In order to achieve these effects, 0.01% or more of Mn must be contained. However, if Mn is contained excessively, creep embrittlement and a decrease in toughness are produced. Therefore, an upper limit is placed, and the content of Mn is set to 0.01 to 1%. The lower limit of the Mn content is preferably 0.05%, further preferably 0.1%. Also, the upper limit of the Mn content is preferably 0.9%, further preferably 0.8%.

P: 0.03% or less

P (phosphorus) is an element contained as an impurity, and decreases the creep ductility together with S. Therefore, an upper limit is placed, and the content of P is set to 0.03% or less. The upper limit of the P content is preferably 0.028%, further preferably 0.025%. Although a lower limit is not especially placed on the P content, an extreme decrease in the P content leads to an increase in steel production cost. Therefore, in the case where importance is attached to cost, the lower limit of the P content is preferably 0.0005%, further preferably 0.001%.

S: 0.01% or less

S (sulfur) is an element contained as an impurity like P, and decreases the creep ductility. Therefore, an upper limit is placed, and the content of S is set to 0.01% or less. The upper limit of the S content is preferably 0.008%, further preferably 0.005%. Although a lower limit is not especially placed on the S content, an extreme decrease in the S content leads to an increase in steel production cost. Therefore, in the case where importance is attached to cost, the lower limit of the S content is preferably 0.0001%, further preferably 0.0003%.

One or more kinds of Ni and Cu: 0.01 to 1% in total

Both of Ni (nickel) and Cu (copper) enhance the hardenability, and are elements effective in obtaining martensitic and/or bainitic structures. The above-described effects are achieved by containing 0.01% or more in total of one or more kinds of Ni and Cu. However, if more than 1% in total of one or more kinds of Ni and Cu are contained, the creep ductility decreases. Therefore, the contents of one or more kinds of Ni and Cu are set to 0.01 to 1%. The contents of one or more kinds of Ni and Cu are, in total, preferably 0.02% or more, further preferably 0.03% or more. Also, the contents of one or more kinds of Ni and Cu are, in total, preferably 0.9% or less, further preferably 0.8% or less.

Nickel and copper need not necessarily be contained compositely. If Ni is contained singly, the content of Ni has only to be 0.01 to 1%, and if Cu is contained singly, the content of Cu has only to be 0.01 to 1%.

Cr: 0.5 to 3.5%

Cr (chromium) is an element essential in assuring the oxidation resistance and high-temperature corrosion resistance in a steel for high-temperature use, and in steadily obtaining the martensitic and/or bainitic structures of matrix. In order to achieve these effects, 0.5% or more of Cr must be contained. However, an excessive content of Cr decreases the stability of carbides on account of the formation of much Cr carbides, and leads to a decrease in creep strength and toughness. Therefore, an upper limit is placed, and the content of Cr is set to 0.5 to 3.5%. The lower limit of the Cr content is preferably 0.8%, further preferably 1%. Also, the upper limit of the Cr content is preferably 3.2%, further preferably 3.0%.

One or more kinds of Mo and W: 0.01 to 3% in total

Both of Mo (molybdenum) and W (tungsten) are elements that solid-solution strengthen the matrix, and contribute to the increase in creep strength. In order to achieve these effects, 0.01% or more in total of one or more kinds of Mo and W must be contained. However, if more than 3% in total of one or more kinds of Mo and W are contained, coarse intermetallic compounds and carbides are formed, and thereby the toughness is decreased. Therefore, the contents of one or more kinds of Mo and W are set to 0.01 to 3% in total. The contents of one or more kinds of Mo and W are, in total, preferably 0.03% or more, further preferably 0.05% or more. Also, the contents of one or more kinds of Mo and W are, in total, preferably 2.8% or less, further preferably 2.5% or less.

Molybdenum and tungsten need not necessarily be contained compositely. If Mo is contained singly, the content of Mo has only to be 0.01 to 3%, and if W is contained singly, the content of W has only to be 0.01 to 3%.

V: 0.01 to 0.5%

V (vanadium) is an element that forms fine carbo-nitrides within grains, and contributes greatly to the increase in creep strength. In order to achieve this effect, 0.01% or more of V must be contained. However, if V is contained excessively, the growth rate of carbo-nitrides increases, and thereby the dispersion strengthening effect of carbo-nitrides is lost at an early stage, and also the toughness is decreased. Therefore, an upper limit is placed, and the content of V is set to 0.01 to 0.5%. The lower limit of the V content is preferably 0.03%, further preferably 0.05%. Also, the upper limit of the V content is preferably 0.45%, further preferably 0.4%.

Nb: 0.005 to 0.1%

Nb (niobium) is an element that forms, like V, fine carbo-nitrides which are stable up to high temperatures within grains, and contributes greatly to the increase in creep strength. In order to achieve this effect, 0.005% or more of Nb must be contained. However, if Nb is contained excessively, the growth rate of carbo-nitrides increases, and thereby the dispersion strengthening effect of carbo-nitrides is lost at an early stage, and also the toughness is decreased. Therefore, an upper limit is placed, and the content of Nb is set to 0.005 to 0.1%. The lower limit of the Nb content is preferably 0.008%, further preferably 0.01%. Also, the upper limit of the Nb content is preferably 0.09%, further preferably 0.08%.

Ti: 0.0005 to 0.1%

Ti (titanium) forms fine nitrides which are stable up to high temperatures, suppresses the coarsening of crystal grains in the HAZ by means of the pinning effect, and has an effect of preventing low-temperature cracks indirectly. In order to achieve these effects, 0.0005% or more of Ti must be contained. However, if Ti is contained excessively, the nitrides become coarse, the pinning effect is lost, and also the toughness decreases. Therefore, an upper limit is placed, and the content of Ti is set to 0.0005 to 0.1%. The lower limit of the Ti content is preferably 0.0008%, further preferably 0.001%. Also, the upper limit of the Ti content is preferably 0.09%, further preferably 0.08%.

B: 0.0001 to 0.02%

B (boron) enhances the hardenability of steel, stabilizes the martensitic and/or bainitic structures, and contributes to the high-temperature strength. In order to achieve these effects, 0.0001% or more of B must be contained. However, if B is contained in large amounts, the HAZ is hardened remarkably, and the low-temperature crack susceptibility is enhanced. Therefore, an upper limit is placed, and the content of B is set to 0.0001 to 0.02%. The lower limit of the B content is preferably 0.0005%, further preferably 0.001%. Also, the upper limit of the B content is preferably 0.018%, further preferably 0.015%.

Al: 0.05% or less

Al (aluminum) has a deoxidizing effect, but if Al is contained excessively, the creep ductility and toughness decrease. Therefore, an upper limit is placed, and the content of Al is set to 0.05% or less. The upper limit of the Al content is preferably 0.045%, further preferably 0.04%. Although a lower limit is not especially placed on the Al content, if the Al content is decreased excessively, the deoxidizing effect is not achieved sufficiently and therefore the cleanliness of steel decreases, and also the production cost increases. Therefore, the lower limit of the Al content is preferably 0.0005%, further preferably 0.001%.

N: 0.0005 to 0.05%

N (nitrogen) is an element effective in combining with V, Nb or Ti to form fine nitrides and assuring the creep strength. In order to achieve this effect, 0.0005% or more of N must be contained. However, if N is contained excessively, the matrix is embrittled, and coarse nitrides are precipitated, so that the toughness is decreased. Therefore, an upper limit is placed, and the content of N is set to 0.0005 to 0.05%. The lower limit of the N content is preferably 0.0008%, further preferably 0.001%. Also, the upper limit of the N content is preferably 0.045%, further preferably 0.04%.

O: 0.01% or less

O (oxygen) is an element existing as an impurity. If O is contained in large amounts, large amounts of oxides are formed, and thereby the workability and ductility are deteriorated. Therefore, an upper limit is placed, and the content of O is set to 0.01% or less. The upper limit of the O content is preferably 0.009%, further preferably 0.008%. A lower limit is not especially placed on the O content, an extreme decrease in the O content leads to an increase in steel production cost. Therefore, in the case where importance is attached to cost, the lower limit of the O content is preferably 0.0005%, further preferably 0.001%.

One feature of "chemical composition 1" that the inside tube (heat resistant ferritic steel) of the double tube for welded structure of the present invention has consists of the above-described elements, the balance being Fe and impurities.

The term "impurities" means elements mixed in from ore and scrap used as a raw material, the production environment, and the like when steel is produced on an industry basis.

Another feature of "chemical composition 1" that the inside tube (heat resistant ferritic steel) of the double tube for welded structure of the present invention has contains one or more kinds of elements selected from Ca, Mg and REM in lieu of a part of Fe.

In the following, explanation is given of the operational advantages of Ca, Mg and REM, which are optional elements, and the reasons why the contents of these elements are restricted.

Ca: 0.05% or less

Ca (calcium) may be contained as necessary because it improves the hot workability of steel. However, if Ca is contained excessively, Ca combines with O and decreases the cleanliness remarkably, so that the hot workability is rather impaired. Therefore, an upper limit is placed on the content of Ca, if being contained, and the content of Ca is set to 0.05% or less. The content of Ca, if being contained, is preferably 0.03% or less.

On the other hand, in order to steadily achieve the above-described effect of Ca, the content of Ca, if being contained, is preferably set to 0.0005% or more.

Mg: 0.05% or less

Mg (magnesium) may be contained as necessary because it improves the hot workability of steel like Ca. However, if Mg is contained excessively, Mg combines with O and decreases the cleanliness remarkably, so that the hot workability is rather impaired. Therefore, an upper limit is placed on the content of Mg, if being contained, and the content of Mg is set to 0.05% or less. The content of Mg, if being contained, is preferably 0.03% or less.

On the other hand, in order to steadily achieve the above-described effect of Mg, the content of Mg, if being contained, is preferably set to 0.0005% or more.

REM: 0.1% or less

REM (rare-earth metal) may be contained as necessary because it has a strong affinity for S and improves the hot workability of steel. However, if REM is contained excessively, REM combines with O and decreases the cleanliness remarkably, so that the hot workability is rather impaired. Therefore, an upper limit is placed on the content of REM, if being contained, and the content of REM is set to 0.1% or less. The content of REM, if being contained, is preferably 0.08% or less.

On the other hand, in order to steadily achieve the above-described effect of REM, the content of REM, if being contained, is preferably set to 0.0005% or more.

The "REM" is the general term of a total of seventeen elements consisting of Sc, Y, and lanthanoids, and the REM content means the total content of one kind or two or more kinds of elements of the REM.

The REM is generally contained in the misch metal. Therefore, REM maybe contained so that the content of REM is made in the above-described range by adding REM in the form of misch metal.

The Ca, Mg and REM can be contained so that only one kind of these elements is contained, or two or more kinds of these elements are contained compositely. The total content in the case where these elements are contained compositely may be 0.2%; however, the total content is preferably 0.14% or less.

(B) Chemical composition 2 (chemical composition of outside tube (heat resistant austenitic steel)):

C: 0.1% or less

C (carbon) is effective in stabilizing austenitic structure, but decreases the corrosion resistance by means of formation of carbides during the use at high temperatures. In particular, if the content of C is more than 0.1%, the corrosion resistance is decreased remarkably during the use at high temperatures. Therefore, an upper limit is placed, and the content of C is set to 0.1% or less. The upper limit of the C content is preferably 0.06%, further preferably 0.03%. Although a lower limit is not especially placed on the C content, an extreme decrease in the C content leads to an increase in steel production cost, and also impairs the stability of austenitic structure. Therefore, the lower limit of the C content is preferably 0.003%, further preferably 0.005%.

Si: 0.01 to 0.8%

Si (silicon) has a deoxidizing function, and also is an element effective in improving the corrosion resistance and oxidation resistance at high temperatures. In order to achieve these effects, 0.01% or more of Si must be contained. However, if Si is contained excessively, the stability of austenite phase decreases, and the creep strength and toughness decrease. Therefore, an upper limit is placed, and the content of Si is set to 0.01 to 0.8%. The lower limit of the Si content is preferably 0.05%, further preferably 0.1%. Also, the upper limit of the Si content is preferably 0.75%, further preferably 0.7%.

Mn: 0.01 to 2%

Mn (manganese) has a deoxidizing function like Si, and in addition, has a function of stabilizing austenitic structure. In order to achieve these effects, 0.01% or more of Mn must be contained. However, if Mn is contained excessively, embrittlement occurs, and thereby the toughness and creep ductility are decreased. Therefore, an upper limit is placed, and the content of Mn is set to 0.01 to 2%. The lower limit of the Mn content is preferably 0.05%, further preferably 0.1%. Also, the upper limit of the Mn content is preferably 1.9%, further preferably 1.8%.

P: 0.04% or less

P (phosphorus) is an element that is contained in steel as an impurity, and segregates at the crystal grain boundaries of HAZ during welding in heat resistant austenitic steel, whereby enhancing the liquation crack susceptibility. Therefore, the content of P is preferably decreased as much as possible; however, an extreme decrease in the P content leads to an increase in steel production cost. For this reason, the P content is set to 0.04% or less. The upper limit of the P content is preferably 0.035%, further preferably 0.03%.

S: 0.01% or less

S (sulfur) is an element that is contained in steel as an impurity like P, enhances the liquation crack susceptibility of heat resistant austenitic steel, and also exerts an adverse influence on the toughness after long-term use. Therefore, the content of S is preferably decreased as much as possible; however, an extreme decrease in the S content leads to an increase in steel production cost. For this reason, the S content is set to 0.01% or less. The upper limit of the S content is preferably 0.008%, further preferably 0.005%.

Ni: 5 to 50%

Ni (nickel) is an element essential in obtaining austenitic structure. The austenitic structure has a high solubility of hydrogen, and, in the present invention, suppresses the diffusion of diffusible hydrogen mixed in during welding to the inside tube side, and contributes indirectly to the decrease in low-temperature crack susceptibility. In order to achieve these effects in the Cr content range (15 to 35%) of the present invention, 5% or more of Ni must be contained. However, since Ni is an expensive element, a high content thereof leads to an increase in cost. Therefore, an upper limit is placed, and the content of Ni is set to 5 to 50%. The lower limit of the Ni content is preferably 6%, further preferably 7%. Also, the upper limit of the Ni content is preferably 49%, further preferably 48%.

Cr: 15 to 35%

Cr (chromium) is an element essential in assuring the oxidation resistance and corrosion resistance at high temperatures. In order to achieve these effects in the Ni content range (5 to 50%) of the present invention, 15% or more of Cr must be contained. However, if the content of Cr is higher than 35%, the stability of austenite phase at high temperatures deteriorates, and the creep strength decreases. Therefore, the content of Cr is set to 15 to 35%. The lower limit of the Cr content is preferably 15.5%, further preferably 16%. Also, the upper limit of the Cr content is preferably 34%, further preferably 33%.

Al: 0.05% or less

Al (aluminum) has a deoxidizing effect; however, if Al is contained excessively, the creep ductility decreases. Therefore, an upper limit is placed, and the content of Al is set to 0.05% or less. The upper limit of the Al content is preferably 0.045%, further preferably 0.04%. A lower limit is not especially placed on the Al content; however, if the Al content is decreased excessively, the deoxidizing effect cannot be achieved sufficiently, so that the cleanliness of steel decreases, and also the production cost rises. Therefore, the lower limit of the Al content is preferably 0.0005%, further preferably 0.001%.

N: 0.001 to 0.25%

N (nitrogen) is an element effective in stabilizing austenite phase. In order to achieve this effect, 0.001% or more of N must be contained. However, if N is contained excessively, large amounts of nitrides are precipitated, and thereby the ductility is decreased. Therefore, an upper limit is placed, and the content of N is set to 0.001 to 0.25%. The lower limit of the N content is preferably 0.002%, further preferably 0.003%. Also, the upper limit of the N content is preferably 0.24%, further preferably 0.23%.

O: 0.01% or less

O (oxygen) is an element existing as an impurity. If O is contained in large amounts, large amounts of oxides are formed, and thereby the workability and ductility are deteriorated. Therefore, an upper limit is placed, and the content of O is set to 0.01% or less. The upper limit of the O content is preferably 0.009%, further preferably 0.008%. A lower limit is not especially placed on the O content, an extreme decrease in the O content leads to an increase in steel production cost. Therefore, in the case where importance is attached to cost, the lower limit of the O content is preferably 0.0005%, further preferably 0.001%.

One feature of "chemical composition 2" that the outside tube (heat resistant austenitic steel) of the double tube for welded structure of the present invention has consists of the above-described elements, the balance being Fe and impurities. As already described, the term "impurities" means elements mixed in from ore and scrap used as a raw material, the production environment, and the like when steel is produced on an industry basis.

Another feature of "chemical composition 2" that the outside tube (heat resistant austenitic steel) of the double tube for welded structure of the present invention has contains one or more kinds of elements selected from Mo, W, Cu, Co, Nb, Ti, V, B, Ca, Mg and REM in lieu of a part of Fe.

In the following, explanation is given of the operational advantages of the above-described elements ranging from Mo to REM, which are optional elements, and the reasons why the contents of these elements are restricted, on a group basis.

First group: one or more kinds selected from Mo: 10% or less and W: 10% or less

Mo: 10% or less

Mo (molybdenum) dissolves in matrix, and contributes greatly to the increase in creep strength at high temperatures. Molybdenum also has an effect of increasing the corrosion resistance. Therefore, Mo may be contained as necessary. However, even if the Mo content is higher than 10%, the above-described effects are saturated, and also intermetallic compounds are formed, so that the characteristics are rather decreased. Therefore, the content of Mo, if being contained, is set to 10% or less. The content of Mo, if being contained, is preferably 9% or less, further preferably 8% or less.

On the other hand, in order to steadily achieve the above-described effects of Mo, the content of Mo, if being contained, is preferably set to 0.01% or more, further preferably set to 0.05% or more.

W: 10% or less

W (tungsten) may be contained as necessary because it dissolves in matrix, and contributes greatly to the increase in creep strength at high temperatures like Mo. However, even if the content of W is higher than 10%, the above-described effect is saturated, and also intermetallic compounds are formed, so that the ductility is decreased. Therefore, the content of W, if being contained, is set to 10% or less. The content of W, if being contained, is preferably 9.8% or less, further preferably 9% or less.

On the other hand, in order to steadily achieve the above-described effect of W, the content of W, if being contained, is preferably set to 0.01% or more, further preferably set to 0.05% or more.

To improve the creep strength at high temperatures, Mo and W, which are elements in the first group, can be contained so that only one kind of either of these elements is contained or two kinds of these elements are contained compositely. The total content in the case where these elements are contained compositely may be 20%; however, the total content is preferably 17% or less.

Second group: one or more kinds selected from Cu: 5% or less and Co: 5% or less

Cu: 5% or less

Cu (copper) may be contained as necessary because it is an austenite forming element like Ni, and enhances the stability of austenite phase. However, if Cu is contained excessively, the hot workability decreases. Therefore, an upper limit is placed on the content of Cu, if being contained, and the content of Cu is set to 5% or less. The content of Cu, if being contained, is preferably 4% or less, further preferably 3.5% or less.

On the other hand, in order to steadily achieve the above-described effect of Cu, the content of Cu, if being contained, is preferably set to 0.01% or more, further preferably set to 0.05% or more.

Co: 5% or less

Co (cobalt) may be contained as necessary because it is an austenite forming element like Ni and Cu, and enhances the stability of austenite phase. However, since Co is an extremely expensive element, the excessively high content of Co leads to a significant increase in cost. Therefore, an upper limit is placed on the content of Co, if being contained, and the content of Co is set to 5% or less. The content of Co, if being contained, is preferably 4% or less, further preferably 3.5% or less.

On the other hand, in order to steadily achieve the above-described effect of Co, the content of Co, if being contained, is preferably set to 0.01% or more, further preferably set to 0.05% or more.

To enhance the stability of austenite phase, Cu and Co, which are elements in the second group, can be contained so that only one kind of either of these elements is contained or two kinds of these elements are contained compositely. The total content in the case where these elements are contained compositely may be 10%; however, the total content is preferably 7% or less.

Third group: one or more kinds selected from Nb: 1% or less, Ti: 1% or less, and V: 1% or less

Nb: 1% or less

Nb (niobium) may be contained as necessary because it combines with C to form fine carbides and further combines with C and N to form fine carbo-nitrides, and contributes to the increase in creep strength. However, if Nb is contained excessively, coarse carbides and carbo-nitrides are precipitated in large amounts, and thereby the creep ductility is decreased. Therefore, an upper limit is placed on the content of Nb, if being contained, and the content of Nb is set to 1% or less. The content of Nb, if being contained, is preferably 0.9% or less, further preferably 0.8% or less.

On the other hand, in order to steadily achieve the above-described effect of Nb, the content of Nb, if being contained, is preferably set to 0.01% or more, further preferably set to 0.05% or more.

Ti: 1% or less

Ti (titanium) may be contained as necessary because it forms carbo-nitrides like Nb, and contributes to the increase in creep strength. However, if Ti is contained excessively, carbo-nitrides are precipitated in large amounts, and thereby the creep ductility is decreased. Therefore, an upper limit is placed on the content of Ti, if being contained, and the content of Ti is set to 1% or less. The content of Ti, if being contained, is preferably 0.9% or less, further preferably 0.8% or less.

On the other hand, in order to steadily achieve the above-described effect of Ti, the content of Ti, if being contained, is preferably set to 0.01% or more, further preferably set to 0.05% or more.

V: 1% or less

V (vanadium) may be contained as necessary because, like Nb and Ti, V forms carbo-nitrides, and contributes to the increase in creep strength. However, if V is contained excessively, carbo-nitrides are precipitated in large amounts, and thereby the creep ductility is decreased. Therefore, an upper limit is placed on the content of V, if being contained, and the content of V is set to 1% or less. The content of V, if being contained, is preferably 0.9% or less, further preferably 0.8% or less.

On the other hand, in order to steadily achieve the above-described effect of V, the content of V, if being contained, is preferably set to 0.01% or more, further preferably set to 0.05% or more.

To improve the creep strength, Nb, Ti and V, which are elements in the third group, can be contained so that only one kind of either of these elements is contained or two or more kinds of these elements are contained compositely.

The total content in the case where these elements are contained compositely may be 3%; however, the total content is preferably 2.4% or less.

Fourth group: B: 0.02% or less

B (boron) may be contained as necessary because it segregates at grain boundaries and strengthens the grain boundaries, and also finely disperses grain boundary carbides, whereby improving the creep strength. However, if B is contained in large amounts, B segregates in large amounts in the high-temperature HAZ near the fusion boundary due to weld thermal cycle during welding, so that the fusing point of grain boundary is decreased, and the liquation crack susceptibility is enhanced. Therefore, an upper limit is placed on the content of B, if being contained, and the content of B is set to 0.02% or less. The content of B, if being contained, is preferably 0.018% or less, further preferably 0.015% or less.
On the other hand, in order to steadily achieve the above-described effects of B, the content of B, if being contained, is preferably set to 0.0005% or more, further preferably set to 0.001% or more.

Fifth group: one or more kinds selected from Ca: 0.05% or less, Mg: 0.05% or less, and REM: 0.1% or less

Ca: 0.05% or less

Ca (calcium) may be contained as necessary because it improves the hot workability of steel. However, if Ca is contained excessively, Ca combines with O and decreases the cleanliness remarkably, so that the hot workability is rather impaired. Therefore, an upper limit is placed on the content of Ca, if being contained, and the content of Ca is set to 0.05% or less. The content of Ca, if being contained, is preferably 0.03% or less.
On the other hand, in order to steadily achieve the above-described effect of Ca, the content of Ca, if being contained, is preferably set to 0.0005% or more.

Mg: 0.05% or less

Mg (magnesium) may be contained as necessary because it improves the hot workability of steel like Ca. However, if Mg is contained excessively, Mg combines with O and decreases the cleanliness remarkably, so that the hot workability is rather impaired. Therefore, an upper limit is placed on the content of Mg, if being contained, and the content of Mg is set to 0.05% or less. The content of Mg, if being contained, is preferably 0.03% or less.
On the other hand, in order to steadily achieve the above-described effect of Mg, the content of Mg, if being contained, is preferably set to 0.0005% or more.

REM: 0.1% or less

REM (rare-earth metal) may be contained as necessary because it has a strong affinity for S and improves the hot workability of steel. However, if REM is contained excessively, REM combines with O and decreases the cleanliness remarkably, so that the hot workability is rather impaired. Therefore, an upper limit is placed on the content of REM, if being contained, and the content of REM is set to 0.1% or less. The content of REM, if being contained, is preferably 0.08% or less. As described already, the "REM" is the general term of a total of seventeen elements consisting of Sc, Y, and lanthanoids, and the REM content means the total content of one kind or two or more kinds of elements of the REM.
On the other hand, in order to steadily achieve the above-described effect of REM, the content of REM, if being contained, is preferably set to 0.0005% or more.
To improve the hot workability, Ca, Mg and REM, which are elements in the fifth group, can be contained so that only one kind of either of these elements is contained or two or more kinds of these elements are contained compositely. The total content in the case where these elements are contained compositely may be 0.2%; however, the total content is preferably 0.14% or less.

(C) Relationship between wall thickness of outside tube and fusion depth in fillet weld:

When the fusion depth in fillet weld reaches the inside tube of double tube, a HAZ that has been coarsened and hardened by being exposed to a high temperature just under the fusing point is formed in the heat resistant ferritic steel forming the inside tube. Hydrogen that has been mixed in from the weld metal during welding diffuses and intrudes into the HAZ, whereby low-temperature cracks are produced in the HAZ in the inside tube.
However, if the wall thickness (mm) of the outside tube of the double tube satisfies Formula of

$$\text{wall thickness of outside tube} \geq \text{fusion depth in fillet weld} + 0.3 \text{ mm}$$

$$\dots (1)$$

in the relationship with the fusion depth (mm) of fillet weld zone, the weld penetration during welding stops on the outside tube side, so that the heat resistant ferritic steel of the inside tube can be prevented from being exposed to a high temperature just under the fusing point. Therefore, the coarsening and hardening of the HAZ in the inside tube are suppressed, and moreover, the diffusion of hydrogen from weld metal to the HAZ in the inside tube is also suppressed, so that low-temperature cracks can be prevented from occurring in the HAZ in the inside tube.

To steadily prevent the heat resistant ferritic steel of the inside tube from being exposed to a high temperature just under the fusing point, the wall thickness of outside tube is preferably set to "fusion depth in fillet weld + 0.5 mm" or larger.

(D) Relationship between wall thickness of outside tube and "wall thickness of outside tube + wall thickness of inside tube", that is, total wall thickness of double tube:

In the case where the wall thickness of the outside tube of the double tube is large, the deformation occurring during fillet welding is large, the "restraint stress" caused by the circumferential restraint of the deformation increases, and liquation cracks occur in the heat resistant austenitic steel forming the outside tube.

However, if the wall thickness of outside tube and "the wall thickness of outside tube + the wall thickness of inside tube", that is, the total wall thickness of the double tube satisfy Formula of

$$\text{wall thickness of outside tube} / (\text{wall thickness of outside tube} + \text{wall}$$

$$\text{thickness of inside tube}) \leq 0.4 \dots (2),$$

the "restraint stress" is reduced, so that the liquation cracks in the outside tube can be prevented from occurring.

However, if the "wall thickness of outside tube / (wall thickness of outside tube + wall thickness of inside tube)" is too little, it is difficult to manufacture the double tube. Therefore, the "wall thickness of outside tube / (wall thickness of outside tube + wall thickness of inside tube)" is preferably 0.1 or more.

The double tube in accordance with the present invention is a closely-adhering double tube in which the outside tube and the inside tube are metallurgically bonded to each other, and is sometimes referred to as a "clad tube".

One example of the method for manufacturing the double tube is as described below. A material that has been assembled by inserting a billet of heat resistant ferritic steel forming the inside tube into a hollow billet of heat resistant austenitic steel forming the outside tube is subjected to a so-called "hot tube-making process" such as a hot-extrusion process or a hot rolling process, whereby a double tube is produced by integrating the outside tube and the inside tube with each other. Usually, to assure the cleanliness of bonding surface, the assembling of the billets is performed in a vacuum or in an inert gas atmosphere. The double tube produced by the hot tube-making process is subjected to cold working such as rolling or drawing, and further subjected to heat treatment to complete a double tube having a required shape. Also, the double tube in accordance with the present invention may be a double tube that is lengthened by butt-welding the double tubes each manufactured by the above-described method.

The length of the fillet weld zone extending in the longitudinal direction on the outside surface of double tube may be the overall length or a part of the double tube.

Furthermore, the material of a part to be welded to the outside surface of double tube by fillet welding may be selected from carbon steel, heat resistant ferritic steel, heat resistant austenitic steel, and the like according the necessary function.

In the following, the present invention is explained more specifically by using examples. However, the present invention is not limited to the examples.

EXAMPLES

By using heat resistant ferritic steels 1 to 3 and heat resistant austenitic steels 4 to 6 each having the chemical composition given in Table 1, double tubes T1 to T7 each having an outside diameter of 63 mm, each of which consists of the inside tube and the outside tube given in Table 2, were manufactured by the hot tube-making process.

[Table 1]

Table 1

| Steel | Chemical composition (mass %), Balance: Fe and impurities | | | | | | | | | | | | | | | | | | |
|---|---|---|---|---|---|---|---|---|---|---|---|---|---|---|---|---|---|---|---|
| | C | Si | Mn | P | S | Cr | Cu | Co | Ni | Mo | W | Ti | V | Nb | Al | B | N | O | Others |
| 1 | 0.06 | 0.19 | 0.22 | 0.015 | 0.001 | 2.3 | 0.03 | - | 0.08 | 0.27 | 1.55 | 0.015 | 0.21 | 0.04 | 0,001 | 0.003 | 0.006 | 0.004 | - |
| 2 | 0.05 | 0.19 | 0.24 | 0.011 | 0.001 | 2.5 | - | - | 0.07 | - | 1.58 | 0.077 | 0.20 | 0.05 | 0.009 | 0.004 | 0.017 | 0.005 | Ca:0.001 |
| 3 | 0.06 | 0.21 | 0.21 | 0.013 | 0.001 | 2.5 | 0.02 | - | 0.07 | 0.32 | 1.61 | 0.008 | 0.22 | 0.05 | 0.008 | 0.003 | 0.005 | 0.005 | Mg:0.0008,REM: 0.0007 |
| 4 | 0.01 | 0.52 | 1.52 | 0.025 | 0.00$*2 | 18.3 | - | - | 8.50 | - | - | - | - | - | 0.005 | - | 0.007 | 0.005 | - |
| 5 | 0.02 | 0.23 | 0.05 | 0.014 | 0.001 | 28.8 | 0.01 | 0.77 | 39.80 | 0.97 | - | - | 0.05 | - | 0.003 | 0,001 | 0.157 | 0.003 | Ca:0.001 |
| 6 | 0.02 | 0.21 | 0.07 | 0.012 | 0.00$*2 | 30.2 | - | - | 38.70 | 1.01 | 0.04 | 0.020 | - | 0.01 | 0.003 | - | 0.138 | 0.00$*2 | Mg:0.001,REM:0.0005 |

EP 2 813 594 B1

14

[Table 2]

Table 2

| Double tube | Steel of inside tube | Steel of outside tube | Wall thickness of inside tube (mm) | Wall thickness of outside tube (mm) | Left side value of Formula (2) |
|---|---|---|---|---|---|
| T1 | 1 | 4 | 4.7 | 1.8 | 0.28 |
| T2 | 1 | 4 | 4.3 | 2.2 | 0.34 |
| T3 | 1 | 4 | 3.9 | 2.6 | 0.40 |
| T4 | 1 | 4 | 5.2 | 1.3 | 0.20 |
| T5 | 1 | 4 | 3.4 | 3.0 | * 0.47 |
| T6 | 2 | 5 | 4.7 | 1.8 | 0.28 |
| T7 | 3 | 6 | 4.7 | 1.8 | 0.28 |

Left side of Formula (2): wall thickness of outside tube / (wall thickness of outside tube + wall thickness of inside tube)
The mark * indicates deviation from the condition defined by the present invention.

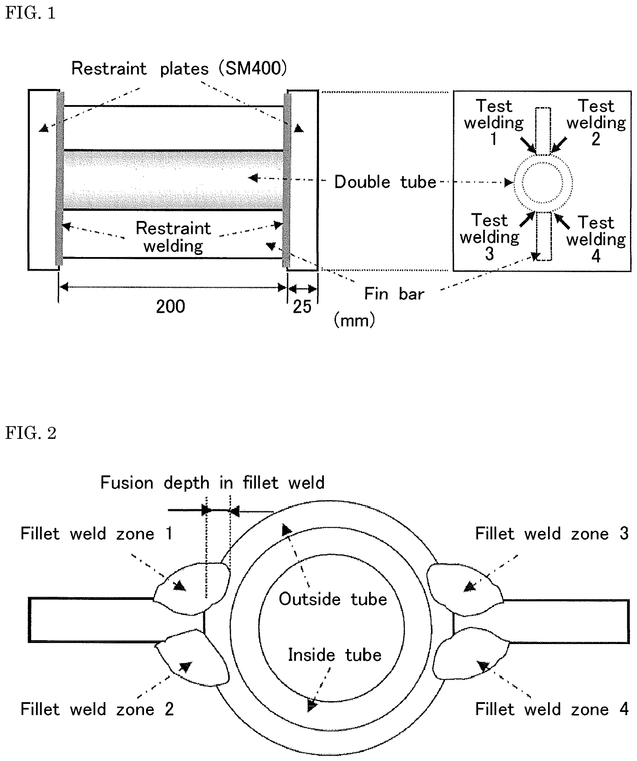

Each of the double tubes T1 to T7 was cut to a length of 200 mm, and test specimens each measuring 200 mm long, 6 mm thick and 15 mm wide, which were obtained by cutting an SM490B steel specified in JIS G3106(2008), were used as fin bars. Thereby, as shown in Figure 1, restraint welded test bodies, each simulating fillet weld of a furnace wall tube, were produced.

The fillet welding between the double tube and the SM490B test specimens was performed at four places of test weldings 1 to 4 as shown in Figure 1. Specifically, submerged arc welding of a heat input of 4 to 12 kJ/cm was performed by using a commercially available welding wire (AWS Standard A5.14ER NiCrCoMo-1) and bonded flux.

From each of the obtained restraint welded test bodies, five test specimens were cut out so that the surface to be examined was a transverse cross section, and were mirror polished.

Next, the test specimens were etched by mixed acid, and thereafter were examined under an optical microscope. At 20 places (five test specimens × four test welding places) of weld zones per each restraint welded test body, the fusion depth in fillet weld was measured by the method shown in Figure 2, and also the presence of low-temperature cracks on the inside tube side and liquation cracks on the outside tube side was examined. Only the restraint welded test bodies in which neither low-temperature cracks nor liquation cracks had occurred were judged to be "acceptable", and others were judged to be "unacceptable".

Table 3 gives the examination results together with welding heat inputs.

[Table 3]

Table 3

| Restraint welded test body | Used double tube | Welding heat input (kJ/cm) | Wall thickness of outside tube of double tube (mm) | Fusion depth in fillet weld (mm) | Presence of low temperature cracks on inside tube side | Presence of liquation cracks on outside tube side | Remarks |
|---|---|---|---|---|---|---|---|
| J1 | T1 | 4 | 1.8 | 0.9 | Not found | Not found | Inventive example |
| J2 | T1 | 8 | 1.8 | 1.0 | Not found | Not found | Inventive example |
| J3 | T1 | 12 | 1.8 | 1.3 | Not found | Not found | Inventive example |
| J4 | T2 | 12 | 2.2 | 1.2 | Not found | Not found | Inventive example |

(continued)

| Restraint welded test body | Used double tube | Welding heat input (kJ/cm) | Wall thickness of outside tube of double tube (mm) | Fusion depth in fillet weld (mm) | Presence of low temperature cracks on inside tube side | Presence of liquation cracks on outside tube side | Remarks |
|---|---|---|---|---|---|---|---|
| J5 | T3 | 12 | 2.6 | 1.3 | Not found | Not found | Inventive example |
| J6 | T4 | 4 | 1.3 | 0.8 | Not found | Not found | Inventive example |
| J7 | T4 | 12 | * 1.3 | 1.4 | Found | Not found | Comparative example |
| J8 | * T5 | 12 | 3.0 | 1.3 | Not found | Found | Comparative example |
| J9 | T6 | 4 | 1.8 | 0.8 | Not found | Not found | Inventive example |
| J10 | T6 | 8 | 1.8 | 1.0 | Not found | Not found | Inventive example |
| J11 | T6 | 12 | 1.8 | 12 | Not found | Not found | Inventive example |
| J12 | T7 | 4 | 1.8 | 0.9 | Not found | Not found | Inventive example |
| J13 | T7 | 8 | 1.8 | 1.1 | Not found | Not found | Inventive example |
| J14 | T7 | 12 | 1.8 | 1.3 | Not found | Not found | Inventive example |

The mark * indicates deviation from the condition defined by the present invention. Regarding the double tube T5, as shown in the table 2, the left side value of the Formula (2) deviates from the condition defined by the present invention.

As given in Table 3, in the restraint welded test bodies J1 to J6 and J9 to J14 satisfying the conditions defined in the present invention, neither the occurrence of low-temperature cracks on the inside tube side of double tube nor the occurrence of liquation cracks on the outside tube side thereof were recognized.

In contrast, in the restraint welded test body J7, the fusion depth in fillet weld was 1.4 mm, being larger than the wall thickness of the outside tube of double tube. Therefore, the heat resistant ferritic steel of the inside tube was exposed to a high temperature, the crystal grains were coarsened and hardened, and further hydrogen mixed in during welding diffused and intruded to the inside tube side. As the result, low-temperature cracks occurred on the inside tube side.

Also, in the restraint welded test body J8, the wall thickness of the outside tube of the used double tube T5 was large with respect to the total wall thickness of the double tube, so that the restraint stress generated in the heat resistant austenitic steel of the outside tube was increased. As the result, liquation cracks were produced.

As is apparent from Table 3, only the double tube satisfying the conditions defined in the present invention has a sufficient weld crack resistance even in the case where the double tube is used by fillet-welding the tube surface as in the case of the furnace wall tube that is an objective of the present invention.

INDUSTRIAL APPLICABILITY

The double tube for welded structure of the present invention is excellent in weld crack resistance. Therefore, if the double tube of the present invention is used, a welded structure forming various types of high-temperature equipment can be manufactured by fillet-welding plates, metal fittings, and the like to the outside surface of tube by means of ordinary submerged arc welding without performing treatment such as preheating, postheating, and cleaning of steel.

**Claims**

**1.** A double tube for welded structure that comprises an inside tube of a heat resistant ferritic steel having chemical composition 1 described below and an outside tube of a heat resistant austenitic steel having chemical composition 2 described below, and is to be used to produce a welded structure by means of forming of a fillet weld zone satisfying Formula (1) described below on an outside surface thereof, wherein wall thicknesses (mm) of the outside tube and inside tube satisfy Formula (2) described below, wherein

$$\text{wall thickness of outside tube} \geq \text{fusion depth in fillet weld} + 0.3 \text{ mm}$$

$$\ldots (1)$$

$$\text{wall thickness of outside tube} / (\text{wall thickness of outside tube} + \text{wall}$$

$$\text{thickness of inside tube}) \leq 0.4 \qquad \ldots (2),$$

and wherein

Chemical composition 1 is a chemical composition comprising, by mass percent, C: 0.01 to 0.1%, Si: 0.01 to 0.5%, Mn: 0.01 to 1%, P: 0.03% or less, S: 0.01% or less, one or more kinds of Ni and Cu: 0.01 to 1% in total, Cr: 0.5 to 3.5%, one or more kinds of Mo and W: 0.01 to 3% in total, V: 0.01 to 0.5%, Nb: 0.005 to 0.1%, Ti: 0.0005 to 0.1%, B: 0.0001 to 0.02%, Al: 0.05% or less, N: 0.0005 to 0.05%, O: 0.01% or less, and optionally one or more kinds of elements selected from Ca: 0.05% or less, Mg: 0.05% or less, and REM: 0.1% or less, the balance being Fe and impurities, and wherein

Chemical composition 2 is a chemical composition comprising, by mass percent, C: 0.1% or less, Si: 0.01 to 0.8%, Mn: 0.01 to 2%, P: 0.04% or less, S: 0.01% or less, Ni: 5 to 50%, Cr: 15 to 35%, Al: 0.05% or less, N: 0.001 to 0.25%, O: 0.01% or less, and optionally one or more kinds of elements shown in the first group to fifth group described below, the balance being Fe and impurities, wherein

The first group is: one or more kinds selected from Mo: 10% or less and W: 10% or less
The second group is: one or more kinds selected from Cu: 5% or less and Co: 5% or less
The third group is: one or more kinds selected from Nb: 1% or less, Ti: 1% or less, and V: 1% or less
The fourth group is: B: 0.02% or less
The fifth group is: one or more kinds selected from Ca: 0.05% or less, Mg: 0.05% or less, and REM: 0.1% or less.

2. The double tube according to claim 1, wherein the outside tube and the inside tube are metallurgically bonded to each other.

3. Use of the double tube according to any one of claims 1 to 2 for a welded structure, wherein the outside tube of the heat resistant austenitic steel is used to produce a welded structure by means of forming of the fillet weld zone satisfying Formula (1).

4. A welded structure using the double tube according to any one of claims 1 to 2, wherein the outside tube of a heat resistant austenitic steel is used for forming a fillet weld zone satisfying Formula (1).

5. Use of the welded structure according to claim 4 for a furnace wall.

6. Furnace wall comprising the welded structure according to claim 4.

7. Method for manufacturing the double tube for welded structure according to any one of the claims 1 to 2, the method comprising:

forming a material by inserting a billet of heat resistant ferritic steel having chemical composition 1 described below into a hollow billet of heat resistant austenitic steel being the outside tube having chemical composition 2 described below;
subjecting the material to a hot tube-making process, whereby the inside tube is formed from the billet of heat resistant ferritic steel, and whereby the double tube is produced by integrating with each other the outside tube and the inside tube;

subjecting the double tube produced by the hot tube-making process to cold working, and further to heat treatment; wherein

Chemical composition 1 is a chemical composition comprising, by mass percent, C: 0.01 to 0.1%, Si: 0.01 to 0.5%, Mn: 0.01 to 1%, P: 0.03% or less, S: 0.01% or less, one or more kinds of Ni and Cu: 0.01 to 1% in total, Cr: 0.5 to 3.5%, one or more kinds of Mo and W: 0.01 to 3% in total, V: 0.01 to 0.5%, Nb: 0.005 to 0.1%, Ti: 0.0005 to 0.1%, B: 0.0001 to 0.02%, Al: 0.05% or less, N: 0.0005 to 0.05%, O: 0.01% or less, and optionally one or more kinds of elements selected from Ca: 0.05% or less, Mg: 0.05% or less, and REM: 0.1% or less, the balance being Fe and impurities, and wherein

Chemical composition 2 is a chemical composition comprising, by mass percent, C: 0.1% or less, Si: 0.01 to 0.8%, Mn: 0.01 to 2%, P: 0.04% or less, S: 0.01% or less, Ni: 5 to 50%, Cr: 15 to 35%, Al: 0.05% or less, N: 0.001 to 0.25%, O: 0.01% or less, and optionally one or more kinds of elements shown in the first group to fifth group described below, the balance being Fe and impurities, wherein

The first group is: one or more kinds selected from Mo: 10% or less and W: 10% or less

The second group is: one or more kinds selected from Cu: 5% or less and Co: 5% or less

The third group is: one or more kinds selected from Nb: 1% or less, Ti: 1% or less, and V: 1% or less

The fourth group is: B: 0.02% or less

The fifth group is: one or more kinds selected from Ca: 0.05% or less, Mg: 0.05% or less, and REM: 0.1% or less.

## Patentansprüche

1. Doppelrohr für eine geschweißte Struktur, das ein innenseitiges Rohr aus einem hitzebeständigen ferritischen Stahl mit einer nachstehend beschriebenen chemischen Zusammensetzung 1 und ein außenseitiges Rohr aus einem hitzebeständigen austenitischen Stahl mit einer nachstehend beschriebenen chemischen Zusammensetzung 2 umfasst und dazu verwendet werden soll, eine geschweißte Struktur mittels Ausbilden einer die nachstehend beschriebene Formel (1) erfüllenden Kehlnahtzone auf einer außenseitigen Oberfläche von diesem zu erzeugen, wobei Wanddicken (mm) des außenseitigen Rohrs und innenseitigen Rohrs die nachstehend beschriebene Formel (2) erfüllen, wobei

$$\text{Wanddicke des außenseitigen Rohrs} \geq \text{Aufschmelztiefe in Kehlnaht} + 0{,}3 \text{ mm} \quad \dots (1)$$

$$\text{Wanddicke des außenseitigen Rohrs} / (\text{Wanddicke des außenseitigen Rohrs} + \text{Wanddicke des innenseitigen Rohrs}) \leq 0{,}4 \quad \dots (2),$$

und wobei

es sich bei der chemischen Zusammensetzung 1 um eine chemische Zusammensetzung handelt, die in Masse-% umfasst: C: 0,01 bis 0,1 %, Si: 0,01 bis 0,5 %, Mn: 0,01 bis 1 %, P: 0,03 % oder weniger, S: 0,01 % oder weniger, eine oder mehrere Art/en von Ni und Cu: 0,01 bis 1 % insgesamt, Cr: 0,5 bis 3,5 %, eine oder mehrere Art/en von Mo und W: 0,01 bis 3 % insgesamt, V: 0,01 bis 0,5 %, Nb: 0,005 bis 0,1 %, Ti: 0,0005 bis 0,1 %, B: 0,0001 bis 0,02 %, Al: 0,05 % oder weniger, N: 0,0005 bis 0,05 %, O: 0,01 % oder weniger, und optional eine oder mehrere Art/en von Elementen, die aus Ca: 0,05 % oder weniger, Mg: 0,05 % oder weniger und SEM: 0,1 % oder weniger ausgewählt sind, wobei es sich bei dem Rest um Fe und Verunreinigungen handelt, und wobei

es sich bei der chemischen Zusammensetzung 2 um eine chemische Zusammensetzung handelt, die in Masse-% umfasst: C: 0,1 % oder weniger, Si: 0,01 bis 0,8 %, Mn: 0,01 bis 2 %, P: 0,04 % oder weniger, S: 0,01 % oder weniger, Ni: 5 bis 50 %, Cr: 15 bis 35 %, Al: 0,05 % oder weniger, N: 0,001 bis 0,25 %, O: 0,01 % oder weniger, und optional eine oder mehrere Art/en von Elementen, die in der nachstehend beschriebenen ersten Gruppe bis fünften Gruppe aufgezeigt sind, wobei es sich bei dem Rest um Fe und Verunreinigungen handelt, wobei

es sich bei der ersten Gruppe um eine oder mehrere Art/en handelt, die aus Mo: 10 % oder weniger und W: 10 % oder weniger ausgewählt ist bzw. sind,

es sich bei der zweiten Gruppe um eine oder mehrere Art/en handelt, die aus Cu: 5 % oder weniger und Co: 5 % oder weniger ausgewählt ist bzw. sind,

es sich bei der dritten Gruppe um eine oder mehrere Art/en handelt, die aus Nb: 1 % oder weniger, Ti: 1 % oder weniger und V: 1 % oder weniger ausgewählt ist bzw. sind,

es sich bei der vierten Gruppe handelt um: B: 0,02 % oder weniger,

es sich bei der fünften Gruppe um eine oder mehrere Art/en handelt, die aus Ca: 0,05 % oder weniger, Mg: 0,05 % oder weniger und SEM: 0,1 % oder weniger ausgewählt ist bzw. sind.

**2.** Doppelrohr nach Anspruch 1, wobei das außenseitige Rohr und das innenseitige Rohr metallurgisch aneinander gebunden sind.

**3.** Verwendung des Doppelrohrs nach einem der Ansprüche 1 bis 2 für eine geschweißte Struktur, wobei das außenseitige Rohr aus dem hitzebeständigen austenitischen Stahl dazu verwendet wird, eine geschweißte Struktur mittels Ausbilden der die Formel (1) erfüllenden Kehlnahtzone zu erzeugen.

**4.** Geschweißte Struktur unter Verwendung des Doppelrohrs nach einem der Ansprüche 1 bis 2, wobei das außenseitige Rohr aus einem hitzebeständigen austenitischen Stahl dazu verwendet wird, eine die Formel (1) erfüllende Kehlnahtzone auszubilden.

**5.** Verwendung der geschweißten Struktur nach Anspruch 4 für eine Ofenwand.

**6.** Ofenwand, die geschweißte Struktur nach Anspruch 4 umfassend.

**7.** Verfahren zum Herstellen des Doppelrohrs für eine geschweißte Struktur nach einem der Ansprüche 1 bis 2, wobei das Verfahren umfasst:

Ausbilden eines Materials durch Einsetzen eines Barrens aus hitzebeständigem ferritischen Stahl mit der nachstehend beschriebenen chemischen Zusammensetzung 1 in einen Hohlbarren aus hitzebeständigem austenitischen Stahl, bei dem es sich um das außenseitige Rohr handelt, mit der nachstehend beschriebenen chemischen Zusammensetzung 2;

Unterziehen des Materials einem Warmrohrherstellungsprozess, wodurch das innenseitige Rohr aus dem Barren aus hitzebeständigem ferritischen Stahl gebildet wird, und wodurch das Doppelrohr erzeugt wird, indem das außenseitige Rohr und das innenseitige Rohr miteinander vereint werden;

Unterziehen des durch den Warmrohrherstellungsprozess erzeugten Dopplerohrs einer Kaltverformung und weiter einer Wärmebehandlung; wobei

es sich bei der chemischen Zusammensetzung 1 um eine chemische Zusammensetzung handelt, die in Masse-% umfasst: C: 0,01 bis 0,1 %, Si: 0,01 bis 0,5 %, Mn: 0,01 bis 1 %, P: 0,03 % oder weniger, S: 0,01 % oder weniger, eine oder mehrere Art/en von Ni und Cu: 0,01 bis 1 % insgesamt, Cr: 0,5 bis 3,5 %, eine oder mehrere Art/en von Mo und W: 0,01 bis 3 % insgesamt, V: 0,01 bis 0,5 %, Nb: 0,005 bis 0,1 %, Ti: 0,0005 bis 0,1 %, B: 0,0001 bis 0,02 %, Al: 0,05 % oder weniger, N: 0,0005 bis 0,05 %, O: 0,01 % oder weniger, und optional eine oder mehrere Art/en von Elementen, die aus Ca: 0,05 % oder weniger, Mg: 0,05 % oder weniger und SEM: 0,1 % oder weniger ausgewählt sind, wobei es sich bei dem Rest um Fe und Verunreinigungen handelt, und wobei es sich bei der chemischen Zusammensetzung 2 um eine chemische Zusammensetzung handelt, die in Masse-% umfasst: C: 0,1 % oder weniger, Si: 0,01 bis 0,8 %, Mn: 0,01 bis 2 %, P: 0,04 % oder weniger, S: 0,01 % oder weniger, Ni: 5 bis 50 %, Cr: 15 bis 35 %, Al: 0,05 % oder weniger, N: 0,001 bis 0,25 %, O: 0,01 % oder weniger, und optional eine oder mehrere Art/en von Elementen, die in der nachstehend beschriebenen ersten Gruppe bis fünften Gruppe aufgezeigt sind, wobei es sich bei dem Rest um Fe und Verunreinigungen handelt, wobei

es sich bei der ersten Gruppe um eine oder mehrere Art/en handelt, die aus Mo: 10 % oder weniger und W: 10 % oder weniger ausgewählt ist bzw. sind,

es sich bei der zweiten Gruppe um eine oder mehrere Art/en handelt, die aus Cu: 5 % oder weniger und Co: 5 % oder weniger ausgewählt ist bzw. sind,

es sich bei der dritten Gruppe um eine oder mehrere Art/en handelt, die aus Nb: 1 % oder weniger, Ti: 1 % oder weniger und V: 1 % oder weniger ausgewählt ist bzw. sind,

es sich bei der vierten Gruppe handelt um: B: 0,02 % oder weniger,

es sich bei der fünften Gruppe um eine oder mehrere Art/en handelt, die aus Ca: 0,05 % oder weniger, Mg: 0,05 % oder weniger und SEM: 0,1 % oder weniger ausgewählt ist bzw. sind.

**Revendications**

1. Tube double pour une structure soudée qui comprend un tube intérieur en acier ferritique résistant à la chaleur présentant la composition chimique 1 décrite ci-dessous et un tube extérieur en acier austénitique résistant à la chaleur présentant la composition chimique 2 décrite ci-dessous, et qui est destiné à être utilisé pour produire une structure soudée moyennant la formation d'une zone de soudure d'angle satisfaisant à la formule (1) décrite ci-dessous sur une surface extérieure de celle-ci, sachant que des épaisseurs de paroi (mm) du tube extérieur et du tube intérieur satisfont à la formule (2) décrite ci-dessous, sachant que

$$\text{épaisseur de paroi du tube extérieur} \geq \text{profondeur de fusion dans la soudure d'angle} + 0{,}3 \text{ mm} \qquad \dots (1)$$

$$\text{épaisseur de paroi du tube extérieur} / (\text{épaisseur de paroi du tube extérieur} + \text{épaisseur de paroi du tube intérieur}) \leq 0{,}4 \qquad \dots (2),$$

et sachant que

la composition chimique 1 est une composition chimique comprenant, en pourcentage massique, C : 0,01 à 0,1 %, Si : 0,01 à 0,5 %, Mn : 0,01 à 1 %, P : 0,03 % ou moins, S : 0,01 % ou moins, un ou plusieurs types de Ni et Cu : 0,01 à 1 % au total, Cr : 0,5 à 3,5 %, un ou plusieurs types de Mo et W : 0,01 à 3 % au total, V : 0,01 à 0,5 %, Nb : 0,005 à 0,1 %, Ti : 0,0005 à 0,1 %, B : 0,0001 à 0,02 %, Al : 0,05 % ou moins, N : 0,0005 à 0,05 %, O : 0,01 % ou moins, et facultativement un ou plusieurs types d'éléments sélectionnés parmi Ca : 0,05 % ou moins, Mg : 0,05 % ou moins, et REM (métal de terres rares) : 0,1 % ou moins, le solde étant Fe et des impuretés, et sachant que

la composition chimique 2 est une composition chimique comprenant, en pourcentage massique, C : 0,1 % ou moins, Si : 0,01 à 0,8 %, Mn : 0,01 à 2 %, P : 0,04 % ou moins, S : 0,01 % ou moins, Ni : 5 à 50 %, Cr : 15 à 35 %, Al : 0,05 % ou moins, N : 0,001 à 0,25 %, O : 0,01 % ou moins, et facultativement un ou plusieurs types d'éléments repris dans les premier au cinquième groupes décrits ci-dessous, le solde étant Fe et des impuretés, sachant que

le premier groupe est : un ou plusieurs types sélectionnés parmi Mo : 10 % ou moins et W : 10 % ou moins,
le deuxième groupe est : un ou plusieurs types sélectionnés parmi Cu : 5 % ou moins et Co : 5 % ou moins,
le troisième groupe est : un ou plusieurs types sélectionnés parmi Nb : 1 % ou moins, Ti : 1 % ou moins, et V : 1 % ou moins,
le quatrième groupe est : B : 0,02 % ou moins,
le cinquième groupe est : un ou plusieurs types sélectionnés parmi Ca : 0,05 % ou moins, Mg : 0,05 % ou moins, et REM (métal de terres rares) : 0,1 % ou moins.

2. Tube double selon la revendication 1, sachant que le tube extérieur et le tube intérieur sont métallurgiquement liés l'un à l'autre.

3. Utilisation du tube double selon l'une quelconque des revendications 1 à 2 pour une structure soudée, sachant que le tube extérieur en acier austénitique résistant à la chaleur est utilisé pour produire une structure soudée par formation de la zone de soudure d'angle satisfaisant à la formule (1).

4. Structure soudée utilisant le tube double selon l'une quelconque des revendications 1 à 2, sachant que le tube extérieur en acier austénitique résistant à la chaleur est utilisé pour former une zone de soudure d'angle satisfaisant à la formule (1).

5. Utilisation de la structure soudée selon la revendication 4 pour une paroi de four.

6. Paroi de four comprenant la structure soudée selon la revendication 4.

7. Procédé de fabrication du tube double pour une structure soudée selon l'une quelconque des revendications 1 à 2, le procédé comprenant :

la formation d'un matériau en insérant une billette en acier ferritique résistant à la chaleur présentant la composition chimique 1 décrite ci-dessous dans une billette creuse en acier austénitique résistant à la chaleur qui est le tube extérieur présentant la composition chimique 2 décrite ci-dessous ;

la soumission du matériau à un processus de fabrication de tube à chaud, sachant que le tube intérieur est formé à partir de la billette en acier ferritique résistant à la chaleur, et sachant que le tube double est produit en intégrant l'un à l'autre le tube extérieur et le tube intérieur ;

la soumission du tube double produit par le processus de fabrication de tube à chaud à un écrouissage, et en outre à un traitement thermique ; sachant que

la composition chimique 1 est une composition chimique comprenant, en pourcentage de masse, C : 0,01 à 0,1 %, Si : 0,01 à 0,5 %, Mn : 0,01 à 1 %, P : 0,03 % ou moins, S : 0,01 % ou moins, un ou plusieurs types de Ni et Cu : 0,01 à 1 % au total, Cr : 0,5 à 3,5 %, un ou plusieurs types de Mo et W : 0,01 à 3 % au total, V : 0,01 à 0,5 %, Nb : 0,005 à 0,1 %, Ti : 0,0005 à 0,1 %, B : 0,0001 à 0,02 %, Al : 0,05 % ou moins, N : 0,0005 à 0,05 %, O : 0,01 % ou moins, et facultativement un ou plusieurs types d'éléments sélectionnés parmi Ca : 0,05 % ou moins, Mg : 0,05 % ou moins, et REM : 0,1 % ou moins, le solde étant Fe et des impuretés, et sachant que la composition chimique 2 est une composition chimique comprenant, en pourcentage de masse, C : 0,1 % ou moins, Si : 0,01 à 0,8 %, Mn : 0,01 à 2 %, P : 0,04 % ou moins, S : 0,01 % ou moins, Ni : 5 à 50 %, Cr : 15 à 35 %, Al : 0,05 % ou moins, N : 0,001 à 0,25 %, O : 0,01 % ou moins, et facultativement un ou plusieurs types d'éléments repris dans les premier à cinquième groupes décrits ci-dessous, le solde étant Fe et des impuretés, sachant que

le premier groupe est : un ou plusieurs types sélectionnés parmi Mo : 10 % ou moins et W : 10 % ou moins,

le deuxième groupe est : un ou plusieurs types sélectionnés parmi Cu : 5 % ou moins et Co : 5 % ou moins,

le troisième groupe est : un ou plusieurs types sélectionnés parmi Nb : 1 % ou moins, Ti : 1 % ou moins, et V : 1 % ou moins,

le quatrième groupe est : B : 0,02 % ou moins,

le cinquième groupe est : un ou plusieurs types sélectionnés parmi Ca : 0,05 % ou moins, Mg : 0,05 % ou moins, et REM : 0,1 % ou moins.

FIG. 1

Restraint plates (SM400)

Double tube

Restraint welding

200   25

Fin bar
(mm)

Test welding 1   Test welding 2

Test welding 3   Test welding 4

FIG. 2

Fusion depth in fillet weld

Fillet weld zone 1

Fillet weld zone 2

Outside tube

Inside tube

Fillet weld zone 3

Fillet weld zone 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60100640 A
- JP 6455352 A
- JP 2200756 A
- JP 7216511 A
- JP 7331390 A
- JP 8127848 A
- JP 8218140 A
- JP 6106237 A
- JP 57120002 A
- JP 6417806 A
- JP 5279801 A
- CN 101530907 A
- JP 4739978 B